# FASCICULE DE BREVET EUROPEEN

(11) **EP 1 742 162 B1**
(45) Date de publication et mention de la délivrance du brevet: **16.12.2009**
(21) Numéro de dépôt: 06116670.8
(22) Date de dépôt: 05.07.2006
(51) Int. Cl.: G06F 21/00, G06F 11/00, G07F 7/10

(54) **Protection de l'exécution d'un programme**
Schutz der Ausführung eines Programms
Program execution protection

(30) Priorité: 05.07.2005 FR 0552047
(43) Date de publication de la demande: 10.01.2007
(73) Titulaire: ST MICROELECTRONICS S.A., 92120 Montrouge (FR)
(72) Inventeur: Teglia, Yannick, 13011 Marseille (FR); Liardet, Pierre-Yvan, 13790 Peynier (FR); Pomet, Alain, 13790 Rousset (FR)
(74) Mandataire: de Beaumont, Michel

(56) Documents cités:
- EP-A- 1 383 047
- FR-A- 2 707 409
- FR-A- 2 856 864

## Description

### Domaine de l'invention

La présente invention concerne de façon générale les circuits électroniques et, plus particulièrement, les microcontrôleurs d'exécution de séquences d'instructions, par exemple, intégrés dans des dispositifs de type carte à puce.

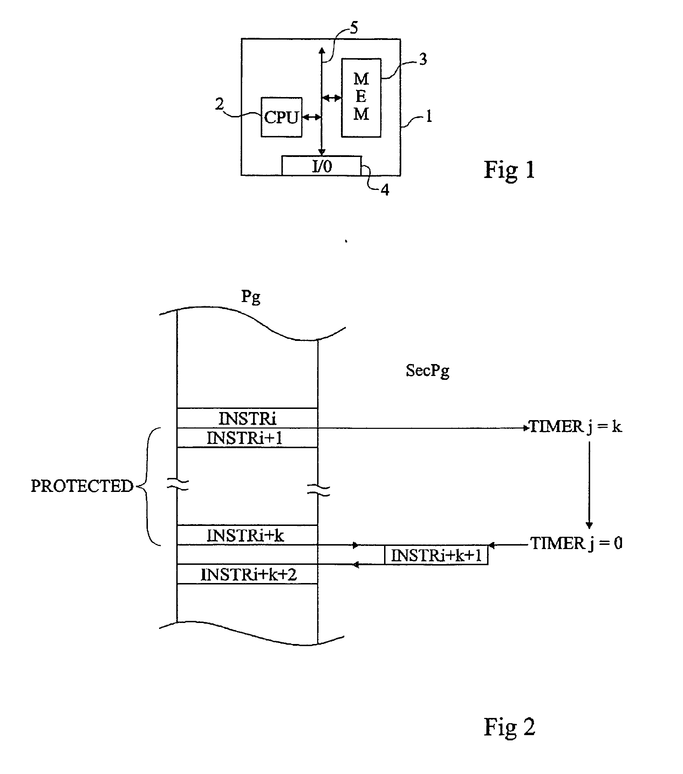

La figure 1 représente, de façon très schématique et sous forme de blocs, un exemple de circuit intégré 1 du type auquel s'applique la présente invention.

Un tel circuit comporte au moins une unité centrale de traitement 2 (CPU), une ou plusieurs mémoires 3 (MEM) parmi lesquelles au moins une mémoire non volatile (par exemple une ROM) de stockage de programmes et une mémoire vive pour contenir les données pendant leur exécution, et un élément 4 d'entrée-sortie (I/O) pour communiquer avec ou sans contact avec l'extérieur du circuit 1. Les différents éléments contenus dans le circuit 1 communiquent par un ou plusieurs bus 5 de données, d'adresses et de commande et d'autres circuits (par exemple des capteurs) peuvent être intégrés au circuit 1.

La présente invention concerne plus particulièrement la protection de l'exécution de programmes manipulant des quantités numériques censées rester dans le circuit intégré 1 contre d'éventuelles tentatives de piratages par injection de faute dans le déroulement des programmes.

### Exposé de l'art antérieur

Les circuits intégrés contenant des quantités numériques censées rester inconnues de l'extérieur (par exemple des clés utilisées par des mécanismes de cryptographie) sont susceptibles d'être piratés par des fraudeurs mettant en oeuvre des processus de déroutement de l'exécution correcte de programmes. De tels processus consistent à perturber le fonctionnement du circuit pendant l'exécution d'un programme (par exemple, par une perturbation introduite sur son horloge) pour provoquer un saut accidentel du programme vers une autre instruction que celle normalement prévue. Un tel saut peut permettre de sortir d'une boucle de contrôle, d'une boucle sans fin suite à une erreur d'authentification, etc. et plus généralement peut permettre d'interpréter les conséquences de ce saut pour découvrir même partiellement les quantités secrètes.

Différents mécanismes existent pour contrôler le déroulement de programmes exécutés par des circuits électroniques.

Une solution connue consiste à effectuer un calcul dit de signature pendant l'exécution d'un programme pour s'assurer que toutes les instructions ont été exécutées.

Une autre solution connue consiste à exécuter un même programme plusieurs fois en parallèle et à vérifier la cohérence des résultats obtenus par ces multiples exécutions.

Un inconvénient des solutions connues est que l'existence même d'un mécanisme de protection de l'exécution du programme n'est pas transparente pour l'utilisateur.

Un autre inconvénient est qu'il s'agit de mécanismes de détection d'une tentative de déroutement d'un programme qui nécessitent, en cas de détection, la prise de mesures particulières, donc un autre programme pour gérer les éventuelles détections de fraude.

Le document EP-A-1 383 047 décrit un procédé de sécurisation de l'exécution d'un programme dans un ensemble électronique consistant à contrôler le temps d'exécution d'une séquence du programme par rapport au temps d'exécution normal prédéterminé de cette séquence.

Le document FR-A-2 856 864 décrit un dispositif et procédé pour crypter le résultat défectueux d'un déchiffrement suite à une attaque par injection de faute afin d'empêcher l'utilisation de ce résultat par l'attaquant.

### Résumé de l'invention

La présente invention vise à pallier tout ou partie des inconvénients des solutions connues de protection de programmes contre d'éventuels déroutements.

L'invention vise plus particulièrement à proposer une solution évitant d'adjoindre, à un mécanisme de détection d'une tentative de déroutement, un mécanisme d'interprétation et de traitement de cette détection.

L'invention vise également à proposer une solution peu gourmande en ressources et particulièrement aisée à mettre en oeuvre dans un microcontrôleur de type carte à puce.

L'invention vise également à proposer une solution qui ne soit pas détectable par un fraudeur éventuel.

Pour atteindre tout ou partie de ces objets, la présente invention prévoit un procédé de protection de l'exécution d'un programme principal contre d'éventuels déroutements, comportant les étapes de :
lors d'une instruction du programme principal, déclencher un compteur temporel d'un compte donné fonction d'instructions qui suivent du programme principal ; et
exécuter, une fois que le compteur a atteint son compte, au moins une instruction d'un programme secondaire dont dépend le résultat du programme principal
caractérisé en ce qu' une instruction du programme principal qui suit une partie dont la durée d'exécution normale correspond audit compte, fournit un résultat qui dépend d'au moins une instruction du programme secondaire et qui est incorrect si ladite instruction du programme secondaire est exécutée à un mauvais moment.

Selon un mode de mise en oeuvre de la présente invention, le résultat du programme principal est un résultat arithmétique.

Selon un mode de mise en oeuvre de la présente invention, le résultat du programme principal est un déclenchement d'un processus.

Selon un mode de mise en oeuvre de la présente invention, le compteur est un compteur de cycles.

Selon un mode de mise en oeuvre de la présente invention, le compteur est un compteur d'instructions.

L'invention prévoit également un circuit intégré comprenant au moins une unité centrale de traitement et des mémoires, ainsi que des moyens pour la mise en oeuvre du procédé de protection.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, de façon très schématique et sous forme de blocs, un exemple de circuit électronique du type auquel s'applique la présente invention ; et
la figure 2 illustre un mode de mise en oeuvre d'un mécanisme de protection du déroulement d'un programme selon la présente invention.

Pour des raisons de clarté, seuls les étapes et éléments qui sont utiles à la compréhension de l'invention ont été représentés aux figures et seront décrits par la suite. En particulier, le contenu des programmes protégés par l'invention n'a pas été détaillé, celle-ci étant compatible avec tout programme habituellement exécuté par un microcontrôleur.

### Description détaillée

Une caractéristique d'un mode de mise en oeuvre de la présente invention est de prévoir, à un instant de l'exécution d'un programme principal à protéger, le lancement d'un compteur qui, lorsqu'un compte donné aura été atteint, exécutera une instruction utile pour le programme principal mais dans le cadre d'un programme secondaire. Une autre caractéristique de ce mode de mise en oeuvre est de poursuivre l'exécution du programme principal pendant le comptage et de prévoir l'instant d'exécution de l'instruction secondaire pour que, dans un fonctionnement normal du programme principal, elle se produise à un instant attendu.

En d'autres termes, l'invention prévoit de reporter, dans l'exécution d'un programme secondaire, une ou plusieurs instructions nécessaires à l'obtention d'un résultat correct par le programme principal et de provoquer l'exécution de ces instructions de façon indépendante du déroulement du programme principal après le déclenchement d'un compteur. Ainsi, en cas de déroutement du programme principal, l'instruction ou le groupe d'instructions du programme secondaire ne se trouvera pas exécuté ou sera exécuté à un mauvais moment, de sorte que les résultats du programme principal seront incorrects.

L'instruction ou le groupe d'instructions exécutées dans le programme secondaire sont, de préférence, des instructions nécessaires au programme principal pour obtenir les résultats attendus. Par exemple, il s'agit d'une étape d'un calcul arithmétique dont la non exécution fait que le résultat fourni en sortie n'est pas correct. Selon un autre exemple, la non exécution d'une étape du programme secondaire bloque une fonction du programme principal, donc le résultat fourni (au sens large) n'est pas correct. Le résultat peut donc être soit le déclenchement d'un autre processus quelconque, soit un résultat arithmétique.

La figure 2 illustre, par une vue très schématique, un mode de mise en oeuvre de la présente invention.

On suppose l'exécution d'un programme principal Pg comprenant des instructions INSTR et, au sein de ce programme, une partie (PROTECTED) dont on souhaite protéger l'exécution contre d'éventuels déroutements. En effet, l'intégralité d'un programme n'a pas nécessairement besoin d'être protégée mais, le plus souvent, seulement des phases mettant en oeuvre des quantités numériques censées rester à l'intérieur du circuit. Dans cet exemple, les instructions que l'on souhaite protéger vont de l'instruction INSTRi+1 à l'instruction INSTRi+k.

Au début de la zone à protéger, l'instruction INSTRi déclenche un compteur (TIMERj) en l'initialisant à une valeur j=k. On suppose ici un compteur temporel (par exemple un compteur de cycles) mais tout autre compteur adapté (par exemple un compteur d'instructions) peut convenir si l'on est capable de déterminer le nombre d'incréments/décréments à lui apporter pendant une exécution normale de la zone à protéger du programme principal. Toutefois, l'incrémentation/décrémentation du compteur est indépendante de l'exécution du programme à protéger.

Le programme principal poursuit son exécution de façon normale jusqu'à l'instruction INSTRi+k.

Selon ce mode de réalisation de l'invention, l'instruction qui suit dans le programme principal l'instruction INSTRi+k est une instruction INSTRi+k+2 dont un résultat correct est conditionné par l'exécution d'une instruction INSTRi+k+1 dans un programme secondaire SecPg. Cette instruction INSTRi+k+1 est exécutée de façon indépendante du programme principal une fois que le compteur TIMER a atteint une valeur j=0.

Le choix de l'instruction INSTRi+k+1 est décidé lors de la conception pour être nécessaire à la fourniture d'un résultat correct par le programme principal ou à une poursuite normale de son fonctionnement à l'issue de l'instruction INSTRi+k, sans toutefois être requise entre les instructions de rang i+1 à i+k du programme principal.

Dans le cas où un déroutement du programme principal se produit dans la zone protégée, cela conduit à un saut. Un tel saut, que ce soit en restant dans la zone protégée ou en passant hors de cette zone, modifie le temps nécessaire à l'arrivée à l'instruction INSTRi+k. Par conséquent, l'instruction INSTRi+k+1 ne sera pas exécutée au non moment et le résultat fourni par le programme principal sera erroné.

Il est à noter que le programme principal n'attend pas d'exécution de l'instruction du programme secondaire mais l'utilise (par exemple, un résultat d'opération non lié aux valeurs des instructions INSTRi+1 à INSTRi+k) pour poursuivre sa propre exécution. Ainsi, l'invention ne prévoit pas de boucle d'attente.

Un avantage de la présente invention est que la protection de l'exécution du programme principal ne s'accompagne d'aucune interprétation suite à une détection de tentative de fraude. En effet, la seule conséquence est l'exécution incorrecte de ce programme. Ainsi, la protection opérée par l'invention est transparente pour le fraudeur éventuel qui ne s'aperçoit pas que le résultat qui lui est fourni est erroné.

Selon une variante, plusieurs instructions pourront être appelées par le programme secondaire.

Selon une autre variante, plusieurs compteurs et boucles secondaires sont prévus soit en parallèle soit en sélection aléatoire par le programme principal.

Bien entendu, la présente invention est susceptible de diverses variantes et modifications qui apparaîtront à l'homme de l'art. En particulier, le choix des instructions à reporter d'un programme principal à protéger à un programme secondaire est à la portée de l'homme du métier en fonction de l'application. En particulier, la réalisation pratique du compteur pour, par exemple, qu'il compte jusqu'à une valeur comparée à la valeur courante ou jusqu'à un débordement est à la portée de l'homme du métier. De plus, la mise en oeuvre pratique de l'invention à partir des indications fonctionnelles données dans la présente description est à la portée de l'homme du métier en utilisant des outils matériels ou de programmations classiques.

## Revendications

1. Procédé de protection de l'exécution d'un programme principal (Pg) contre d'éventuels déroutements, comportant les étapes de :
lors d'une instruction du programme principal, déclencher un compteur temporel (TIMER) d'un compte donné fonction d'instructions qui suivent du programme principal ; et
exécuter, une fois que le compteur a atteint son compte, au moins une instruction d'un programme secondaire dont dépend le résultat du programme principal, **caractérisé en ce qu'**une instruction (INSTRi+k+2) du programme principal qui suit une partie dont la durée d'exécution normale correspond audit compte, fournit un résultat qui dépend d'au moins une instruction (INSTRi+k+1) du programme secondaire et qui est incorrect si ladite instruction du programme secondaire est exécutée à un mauvais moment.

2. Procédé selon la revendication 1, dans lequel le résultat du programme principal est un résultat arithmétique.

3. Procédé selon l'une quelconque des revendications 1 et 2, dans lequel le résultat du programme principal est un déclenchement d'un processus.

4. Procédé selon l'une quelconque des revendications 1 à 3, dans lequel le compteur est un compteur de cycles.

5. Procédé selon l'une quelconque des revendications 1 à 4, dans lequel le compteur est un compteur d'instructions.

6. Circuit intégré comprenant au moins une unité centrale de traitement (2) et des mémoires (3), **caractérisé en ce qu'**il comporte des moyens pour la mise en oeuvre du procédé selon l'une quelconque des revendications 1 à 5.

## Claims

1. A method for protecting the execution of a main program (Pg) against possible traps, comprising:
on occurrence of an instruction from the main program, starting a time counter (TIMER) of a given count according to next instructions of the main program; and
executing, once the counter has reached its count, at least one instruction of a secondary program from which the result of the main program depends, **characterized in that** an instruction (INSTRi+k+2) of the main program following a part of it, the normal execution time of which corresponds to said count, provides a result which depends on at least one instruction (INSTRi+k+1) of the secondary program and which is incorrect if said instruction of the secondary program is executed at a wrong time.

2. The method of claim 1, wherein the result of the main program is an arithmetical result.

3. The method of claim 1 or 2, wherein the result of the main program is the starting of a process.

4. The method of any of claims 1 to 3, wherein the counter is a cycle counter.

5. The method of any of claims 1 to 4, wherein the counter is an instruction counter.

6. An integrated circuit comprising at least one central processing unit (2) and memories (3), **characterized in that** it comprises means for implementing the method of any of claims 1 to 5.

## Patentansprüche

1. Verfahren zum Schutz der Ausführung eines Hauptprogramms (Pg) gegen mögliche Fallen, das Folgendes aufweist:
Starten eines Zeitzählers (Timer) mit einem gegebenen Zählerstand, der nächstfolgenden Anweisungen des Hauptprogramms entspricht, beim Auftreten einer Anweisung des Hauptprogramms; und
Ausführen wenigstens einer Anweisung eines sekundären Programms von dem das Ergebnis des Hauptprogramms abhängt, sobald der Zähler seinen Zählerstand erreicht hat, **dadurch gekennzeichnet, dass** eine Anweisung (INSTRi+k+2) des Hauptprogramms, die einem Teil desselben folgt, ein Ergebnis bereitstellt, welches von wenigstens einer Anweisung (INSTRi+k+1) des sekundären Programms abhängt und welches inkorrekt ist, falls die Anweisung des sekundären Programms zu einem falschen Zeitpunkt ausgeführt wird.

2. Verfahren nach Anspruch 1, wobei das Ergebnis des Hauptprogramms ein arithmetisches Ergebnis ist.

3. Verfahren nach Anspruch 1 oder 2, wobei das Ergebnis des Hauptprogramms der Start eines Prozesses ist.

4. Verfahren nach einem der Ansprüche 1 bis 3, wobei der Zähler ein Zykluszähler ist.

5. Verfahren nach einem der Ansprüche 1 bis 4, wobei der Zähler ein Anweisungszähler ist.

6. Ein integrierter Schaltkreis, der wenigstens eine zentrale Prozessoreinheit (2) und Speicher (3) aufweist, **dadurch gekennzeichnet, dass** er Mittel zum implementieren des Verfahrens nach einem der Ansprüche 1 bis 5 aufweist.
